# EUROPEAN PATENT APPLICATION

(11) **EP 0 621 573 A1**
(43) Date of publication of application: **26.10.1994**
(21) Application number: 94201087.7
(22) Date of filing: 20.04.1994
(51) Int. Cl.: G08G 1/052

(54) **method and device for speed measurement**

(30) Priority: 20.04.1993 NL 9300762
(71) Applicant: GATSOMETER B.V., NL-2051 EE Overveen (NL)
(72) Inventor: Gatsonides, Tom, NL-2116 EH Bentveld (NL)
(74) Representative: Bartelds, Erik

(57) **Abstract**

The invention relates to a method for measuring the speed of a vehicle, particularly a motor vehicle, passing a measurement position, by transmitting a radiation beam to the measurement position, receiving a radiation beam reflected by the vehicle passing the measurement position, and determining therefrom the speed at which the vehicle passes the measurement position, wherein a radiation beam is then transmitted to the measurement position only when a vehicle is passing this position. The radiation beam can herein be generated and transmitted continuously but only be directed at the measurement position when a vehicle passes this position.

The invention further relates to a device for performing this method, with means for generating and transmitting a radiation beam, means for receiving a reflected radiation beam, means for determining therefrom the speed at which the measurement position was passed, and means for interrupting a measurement co-acting with the beam generating and transmitting means.

## Description

The invention relates to a method for measuring the speed of a vehicle, particularly a motor vehicle, passing a measurement position, by transmitting a radiation beam to the measurement position, receiving a radiation beam reflected by the vehicle passing the measurement position, and determining therefrom the speed at which the vehicle passes the measurement position. Such a method is generally known and is regularly used by police at radar traps.

Herein a radar installation, for example as made commercially available by applicant under the name "Gatso Micro Radar", is disposed at a fixed location along a road or in a travelling police vehicle. The radar installation transmits a wave beam at a fixed angle of for instance 20° to the road axis or the longitudinal axis of the vehicle, and thus defines a measurement area or measurement position covered by the wave beam. When a motor vehicle passes through the beam a part of the wave beam is thereby reflected and received by the installation. From the frequency difference between the transmitted and received wave beam (as a result of the so-called Doppler effect) the speed can be determined at which the vehicle has passed through the beam. If this speed exceeds a determined set limit value, a camera for instance can be activated or a following police stop point can be alerted. The method is applied to both passing traffic and oncoming traffic.

The known method has the drawback however that when a vehicle passes through the transmitted wave beam, the latter is reflected not only to the radar installation but also in other directions, including the direction of the vehicles travelling behind the vehicle passing through the beam. When these following vehicles are provided with a so-called radar detector, they are hereby warned of the approaching radar trap, so that they have the opportunity to reduce their speed in good time before the measurement position. This frustrates the measurement, since it is precisely drivers who are in the habit of exceeding the maximum speed who will generally possess a radar detector. This problem is becoming more acute now that radar detectors are on the market which can detect dispersed radar beams over a distance of about 500 m. It is otherwise not only passing vehicles which cause dispersal of the radar beam but also road signs, crash barriers, lamp-posts and the like can cause undesired reflection of the beam, whereby approaching drivers are warned of a radar trap.

The invention therefore has for its object to provide a method of the above described type, wherein these drawbacks do not occur. This is achieved according to the invention in that a radiation beam is transmitted to the measurement position only when a vehicle is passing this position. This prevents the traffic approaching the measurement position being warned of a radar trap by an uninterrupted flow of reflected radar waves.

Since any radar installation currently allowed by law for speed measurements needs a determined time to start up and generate a stable wave beam, it is not properly possible to alternatingly switch the radar installation on and off subject to the presence of a vehicle in the beam. The radiation beam is therefore preferably generated and transmitted continuously but only directed at the measurement position when a vehicle is passing this position.

In order to enable timely directing of the wave beam to the measurement position the presence of a vehicle is preferably detected in advance of the measurement position and the moment at which the measurement position is passed is determined from this detection.

Since in heavy traffic the radar beam would be directed practically continuously to the measurement position when the speed of all passing vehicles is being measured, whereby considerable dispersal radiation would still alert the approaching traffic, during detection of the vehicle a provisional speed measurement is preferably performed in advance of the measurement position and the radiation beam is only directed to the measurement position if the provisionally measured speed exceeds a determined value. The beam is thus directed only at possible offenders.

The invention also relates to a device with which the above stated method can be performed in simple manner. The invention provides for this purpose a device for measuring the speed of a vehicle, particularly a motor vehicle, passing a measurement position, provided with means for generating and transmitting a radiation beam, means for receiving a radiation beam reflected by the vehicle passing the measurement position, and means for determining therefrom the speed at which the measurement position is passed, characterized by means for interrupting a measurement co-acting with the beam generating and transmitting means. The interrupting means are preferably adapted to direct the transmitted radiation beam to a point remote from the measurement position. Generating of the beam does not therefore have to be interrupted and it is thus unnecessary to wait for each measurement until the beam is stabilized. The location point remote from the measurement position must herein of course be chosen such that no reflection occurs in the direction of the traffic approaching the measurement position. The beam could for instance be directed upward.

The interrupting means can take many forms. A structurally simple embodiment is obtained when the beam transmitting means is fixedly disposed and the interrupting means comprise a beam deflecting element which is displaceable between a first position in which it blocks the path of the beam transmitting means to the measurement position, and a second position in which it opens this path. The beam deflecting element can herein be further coated with a radiation-absorbing material in order to prevent the beam deflecting element reflecting too much radiation to the radar installation, whereby the latter could be "blown". To wholly exclude the possibility of dispersal of the radar beam, the beam deflecting element can in its first position substantially completely cover the beam transmitting means.

The beam transmitting means can also be displaceable and the interrupting means can comprise a mechanism for displacing the beam transmitting means such that they are directed at a point remote from the measurement position.

For timely directing of the beam at the measurement position the device can be further provided with means co-acting with the interrupting means for detecting the presence of a vehicle in advance of the measurement position and means co-acting therewith for determining the moment at which the vehicle will pass the measurement position. In order to prevent practically uninterrupted directing of the beam to the measurement position the device can be provided with means for performing the provisional speed measurement co-acting with the detecting means. This is achieved in comparatively simple manner when the detecting means are formed by a CCD camera and the means for performing a provisional speed measurement are adapted to determine the speed at which the image of the CCD camera changes. The speed can thus be determined easily by counting the number of grey tone pixels of the CCD camera which change per unit of time.

The invention is now elucidated in the light of an embodiment, wherein reference is made to the annexed drawing, in which:

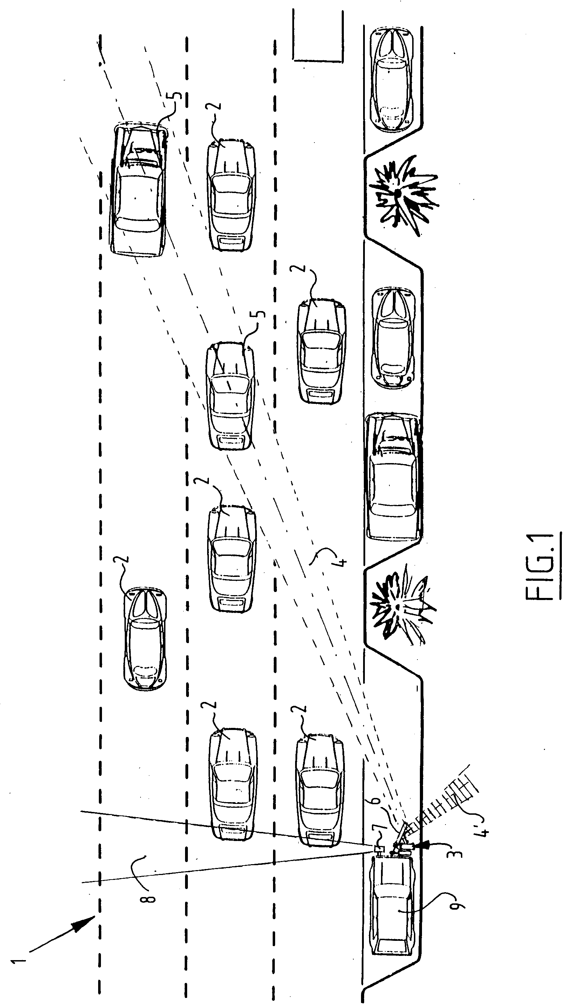

fig. 1 shows a top view of a traffic highway where a speed measurement is being carried out making use of the method according to the invention, and
fig. 2 is a perspective view of a speed measuring device according to the invention.

In a method for measuring the speed of vehicles 2 travelling on a road 1 a beam 4 is transmitted at an angle of for instance 20 degrees to the lengthwise axis of the road 1 by a measuring device 3, for instance a radar speed measuring device as made commercially available by applicant under the name "Gatso Micro Radar". The projection of this beam 4, which may for instance have an apex angle of 5 degrees, onto each of the separate travel lanes forms a number of measurement positions where the speed of passing vehicles 5 can be measured. For this purpose a radiation beam (not shown here) reflected by the vehicle 5 passing the measurement position is received in the device in known manner and, from the frequency difference between the transmitted and the received radiation beam, which is a result of the so-called Doppler effect, the speed is determined at which the vehicle 5 has passed the measurement position. If this speed exceeds a determined value, a camera for instance can then be activated or a description of the offending vehicle 5 can be passed on to a police stop point present further along the road. In order to prevent radar radiation being dispersed in the direction of the approaching vehicles 2 as a result of reflection of the beam 4 against for example crash barriers, lamp-posts, road signs and the like, which vehicles would thereby be alerted to the approaching trap if they were equipped with a so-called radar detector and could therefore reduce speed in good time, the radiation beam 4 is only transmitted to the measurement position when a vehicle 5 is actually passing this position.

Since in practice it is not properly possible to alternatingly switch on and off the radar device when a vehicle 5 passes the measurement position, since the radar requires several seconds to stabilize, it is not the generating and transmitting of the radiation beam 4 which is interrupted but only the direction thereof which is changed when no vehicles 5 are located at the measurement position. To this end an element 6 can be placed in the path of the radar beam, whereby the beam 4 is deflected, as indicated in the drawing with 4'. It is of course important here that the beam is deflected such that the deflected beam 4' does not encounter any obstacles which would cause a reflection of the beam in the direction of the approaching traffic. Instead of the sideways deflection shown here, an upward deflection can for instance be selected where generally no obstacles will be found, or it can even be decided to completely cover the installation 3.

To enable timely re-directing of the radar beam 4 at the measurement position, the presence of a vehicle 2 is detected well in advance of the measurement position, and the moment of passing the measurement position is determined from this detection. The device 3 comprises for this purpose detecting means 7, for instance in the form of a light-sensitive element or a video camera. The detecting means 7 generate a signal when a vehicle 2 passes their field of view 8, whereafter a calculation is made from this signal as to when the vehicle 2 will pass the measurement position and the beam 4 is directed in good time at the measurement position. After the vehicle has left the measurement position and the measuring device 3 thus no longer receives any reflected beam, the beam 4 can be again deflected. The beam 4 can also be aimed at the measurement position for a particular fixed time.

When the above described method is applied in heavy traffic, vehicles will be found on the measurement position virtually continuously. The radiation reflected by these vehicles 5 then forms an uninterrupted warning signal for approaching vehicles 2 equipped with a radar detector, while a large part of the thus performed measurements is superfluous since the majority of the passing vehicles will generally keep to the maximum speed. In order to enable more effective measurement in such cases and to actually enable speeding offenders to be apprehended, the speed measurements can be performed selectively. To this end not only is the approach to the measurement position by a vehicle 2 detected, but this detection is related to a provisional speed measurement. Only if it is found from this provisional speed measurement that the vehicle 2 is approaching the measurement position at a speed higher than the maximum permitted speed is the radar beam 4 directed to the measurement position. In this manner the number of measurements performed is greatly limited, whereby the chance is greatly reduced of approaching traffic being warned by the reflection of the radar beam against the measured vehicle 5. Such a provisional speed measurement can for instance be performed simply when the detecting means 7 comprise a so-called CCD camera. In this case the number of pixels of the image of the camera changing in grey tone per unit of time can be counted in simple manner, whereby the speed of the vehicle 2 approaching the measurement position is determined.

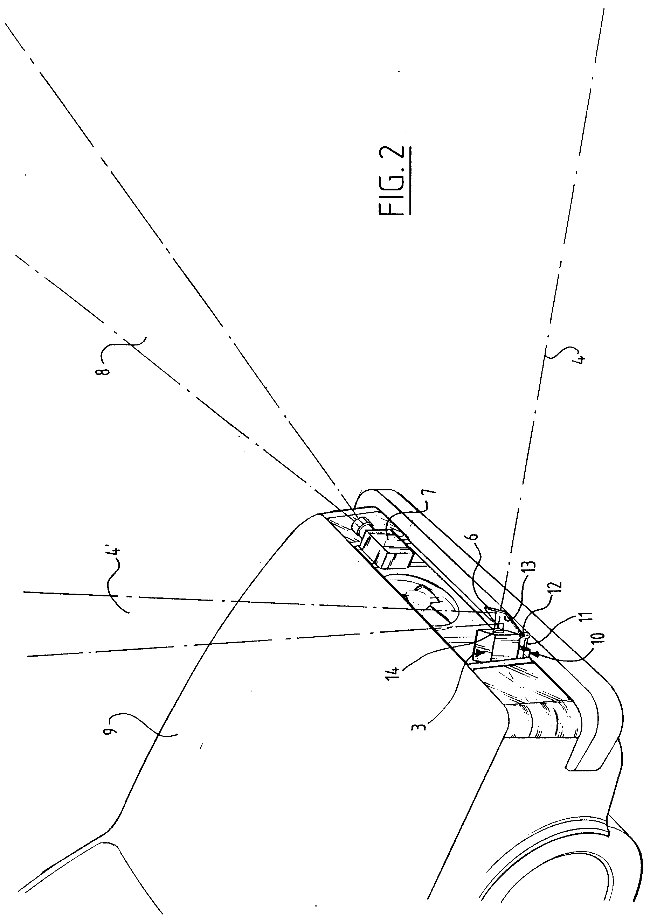

The beam deflecting element 6 (fig. 2) is connected hingedly on a shaft 12 to the measuring device 3, and is displaced under control of the detecting means 7 between its first position, wherein it blocks the path of a beam transmitting aperture 14 to the measurement position and therefore deflects the beam 4', to a second position in which it opens this path with a displacing mechanism 10 which comprises a movable arm 11 connected to the beam deflecting element 6. The displacing mechanism 10 can be formed by a hydraulic or pneumatic piston or by an electromagnet in combination with a resetting spring. The hinge shaft 12 can have any desired direction as long as it is ensured that the deflected beam 4' does not encounter any obstacles. Instead of being arranged hingedly the beam deflecting element can of course also be arranged slidably or in otherwise displaceable manner. The element 6 can even completely cover the transmitting and receiving aperture 14. In that case element 6 must however be coated with a layer 13 of radiation-absorbing material in order to prevent the radar installation 3 being "blown" by the beam reflected by the element 6.

With the illustrated arrangement of the radar device 3 it is possible to carry out measurements when the police vehicle 9 is both stationary and on the move. It is of course also conceivable for the radar installation 3 to be fixedly disposed along a road, for instance on a radar post, or suspended on a road sign extending above the road.

Instead of the embodiment shown with a deflecting element to be placed in front of the radar installation it is of course also conceivable to give the part of the radar device transmitting the beam a pivoting form and to direct it away from the measurement position when no vehicle is located there.

## Claims

1. Method for measuring the speed of a vehicle (5), particularly a motor vehicle, passing a measurement position, by transmitting a radiation beam (4) to the measurement position, receiving a radiation beam reflected by the vehicle (5) passing the measurement position, and determining therefrom the speed at which the vehicle (5) passes the measurement position**, characterized in that** a radiation beam (4) is transmitted to the measurement position only when a vehicle (5) is passing this position.

2. Method as claimed in claim 1, **characterized in that** the radiation beam (4) is generated and transmitted continuously but only directed at the measurement position when a vehicle (5) is passing this position.

3. Method as claimed in claim 1 or 2, **characterized in that** the presence of a vehicle (2) is detected in advance of the measurement position and the moment at which the measurement position is passed is determined from this detection.

4. Method as claimed in claim 3, **characterized in that** during detection of the vehicle (2) a provisional speed measurement is performed in advance of the measurement position and the radiation beam (4) is only directed at the measurement position if the provisionally measured speed exceeds a determined value.

5. Device (3) for measuring the speed of a vehicle (5), particularly a motor vehicle, passing a measurement position, provided with means (14) for generating and transmitting a radiation beam (4), means (14) for receiving a radiation beam reflected by the vehicle (5) passing the measurement position, and means for determining therefrom the speed at which the measurement position is passed, **characterized by** means for interrupting a measurement coacting with the beam generating and transmitting means (14).

6. Device as claimed in claim 5, **characterized in that** the interrupting means are adapted to direct the transmitted radiation beam (14) to a point remote from the measurement position.

7. Device as claimed in claim 6, **characterized in that** the beam transmitting means (14) is fixedly disposed and the interrupting means comprise a beam deflecting element (6) which is displaceable between a first position, in which it blocks the path of the beam transmitting means (14) to the measurement position, and a second position in which it opens this path.

8. Device as claimed in claim 7, **characterized in that** the beam deflecting element (6) is coated with radiation-absorbing material (13).

9. Device as claimed in claim 8, **characterized in that** in its first position the beam deflecting element (6) substantially completely covers the beam transmitting means (14).

10. Device as claimed in claim 6, **characterized in that** the beam transmitting means (14) are displaceable and the interrupting means comprise a mechanism for displacing the beam transmitting means (14) such that they are directed to a point remote from the measurement position.

11. Device as claimed in any of the claims 5-10, **characterized by** means (7) co-acting with the interrupting means for detecting the presence of a vehicle (2) in advance of the measurement position and means co-acting therewith for determining the moment at which the vehicle (2) will pass the measurement position.

12. Device as claimed in claim 11, **characterized by** means for performing a provisional speed measurement co-acting with the detecting means (7).

13. Device as claimed in claim 12, **characterized in that** the detecting means (7) are formed by a CCD camera and the means for performing a provisional speed measurement are adapted to determine the speed at which the image of the CCD camera (7) changes.
